# EUROPEAN PATENT APPLICATION

(11) **EP 4 354 638 A1**
(43) Date of publication of application: **17.04.2024**
(21) Application number: 21960939.3
(22) Date of filing: 20.10.2021
(51) Int. Cl.: H01M 50/533, H01M 50/536

(54) **BATTERY CELL AND MANUFACTURING METHOD AND DEVICE THEREFOR, BATTERY, AND ELECTRIC DEVICE**

(71) Applicant: Contemporary Amperex Technology Co., Limited, Fujian PRC 352100 (CN)
(72) Inventor: ZHU, Wenqi, Ningde, Fujian 352000 (CN); WEN, Yuqian, Ningde, Fujian 352000 (CN); YANG, Rui, Ningde, Fujian 352000 (CN)
(74) Representative: Laufhütte, Dieter
(86) International application number: PCT/CN2021/125108
(87) International publication number: WO 2023/065187

(57) **Abstract**

This application provides a battery cell, a manufacturing method and manufacturing device thereof, a battery, and an electric apparatus, and belongs to the field of battery technologies. The battery cell includes a housing assembly, an electrode assembly, and a current collecting member. The housing assembly includes an electrode lead-out portion for inputting or outputting electrical energy. The electrode assembly is provided in the housing assembly, and the electrode assembly has a tab. The current collecting member is provided in the housing assembly, and the current collecting member is configured to electrically connect the tab and the electrode lead-out portion. The current collecting member includes a body and an elastic portion connected to the body, one of the body and the elastic portion is welded to the tab, and the other is electrically connected to the electrode lead-out portion, and the elastic portion is configured to cushion vibrations between the electrode assembly and the housing assembly. The battery cell of this structure can protect the electrode assembly to some extent and is conducive to reducing detachment or fracture of the tab, thereby extending the service life of the battery cell.

## Description

### TECHNICAL FIELD

This application relates to the field of battery technologies, specifically, to a battery cell, a manufacturing method and manufacturing device thereof, a battery, and an electric apparatus.

### BACKGROUND

With outstanding advantages such as high energy density, low environmental pollution, high power density, long service life, wide application range, and small self-discharge coefficient, lithium-ion batteries have been one of the most widely used batteries in the world today and also an important part of new energy development. With the continuous development of lithium-ion battery technologies, higher requirements have been imposed on the quality and service life of lithium-ion batteries. However, during the use of a battery, a battery cell of the battery is subjected to long-term shaking and vibration in the use environment, resulting in short service life of the battery in the prior art.

### SUMMARY

Embodiments of this application provide a battery cell, a manufacturing method and manufacturing device thereof, a battery, and an electric apparatus, which can effectively extend the service life of the battery.

According to a first aspect, an embodiment of this application provides a battery cell including a housing assembly, an electrode assembly, and a current collecting member. The housing assembly includes an electrode lead-out portion for inputting or outputting electrical energy; the electrode assembly is provided in the housing assembly, and the electrode assembly has a tab; the current collecting member is provided in the housing assembly, and the current collecting member is configured to electrically connect the tab and the electrode lead-out portion. The current collecting member includes a body and an elastic portion connected to the body, one of the body and the elastic portion is welded to the tab, and the other is electrically connected to the electrode lead-out portion, and the elastic portion is configured to cushion vibrations between the electrode assembly and the housing assembly.

In the above technical solution, the housing assembly has the electrode lead-out portion for inputting or outputting electrical energy, and the tab of the electrode assembly is electrically connected to the electrode lead-out portion through the current collecting member to achieve input and output of electrical energy for the battery cell. The current collecting member is provided with the body and the elastic portion connected to the body, and one of the body and the elastic portion is welded to the tab, and the other is electrically connected to the electrode lead-out portion, so that the elastic portion can cushion vibrations between the electrode assembly and the housing assembly when the electrode assembly moves relative to the housing assembly. On one hand, the battery cell of this structure can greatly alleviate the rigid collisions between the electrode assembly and the electrode lead-out portion when the electrode assembly moves in the housing assembly, which can protect the electrode assembly to some extent and is conducive to the long-term use of the battery cell. On the other hand, the flexible connection between the tab and the electrode lead-out portion can effectively alleviate the rigid pulling between the tab and the current collecting member when the electrode assembly moves relative to the housing assembly, helping reduce detachment or fracture of the tab, and greatly reducing the risk of electrical connection failure of the battery cell, thus effectively extending the service life of the battery cell and improving the use performance of the battery cell.

In some embodiments, the current collecting member includes a plurality of such elastic portions; and the plurality of elastic portions are spaced apart on the body along a circumferential direction of the body.

In the above technical solution, a plurality of elastic portions are provided on the body and the plurality of elastic portions are circumferentially spaced apart on the body. The battery cell of this structure can, on one hand, improve the cushion effect between the electrode assembly and the housing assembly, to contribute to improving the protective effect on the electrode assembly, and on the other hand, allows current to evenly flow between the elastic portions and the body, to reduce the risk of temperature rise of the battery cell caused by excessive local current. In addition, the cushion effect of the current collecting member is not affected when one of the plurality of elastic portions is damaged, helping to extend the service life of the battery cell and reduce the post-maintenance cost of the battery cell.

In some embodiments, a plurality of through holes are provided on the body; the plurality of through holes are spaced apart on the body along the circumferential direction of the body; and the elastic portions are provided in correspondence with the through holes, and the elastic portion is connected to a hole wall of the through hole.

In the above technical solution, the plurality of through holes are provided on the body, and each elastic portion corresponds to a through hole and the elastic portion is connected to a hole wall of the through hole, so that the elastic portion can not only protrude from two sides of the body but also retract in the through hole of the body when cushioning vibrations between the electrode assembly and the housing assembly, thus a cushioning region range of the elastic portion can be widened, which in turn is conducive to improving the cushioning effect between the electrode assembly and the housing assembly.

In some embodiments, the body is integrally formed with the elastic portion.

In the above technical solution, the body and the elastic portion are arranged as an integrally formed structure. On one hand, this can improve the connection strength between the elastic portion and the body, so that the connection reliability between the elastic portion and the body can be improved when the elastic portion cushions vibrations between the electrode assembly and the housing assembly. On the other hand, this is conducive to processing the elastic portion on the body, facilitating the manufacturing of the battery cell and reducing the production cost of the battery cell.

In some embodiments, the housing assembly has a wall portion; the wall portion is provided with an electrode lead-out hole, the electrode lead-out portion is mounted in the electrode lead-out hole, and at least a part of the electrode lead-out portion protrudes from an outer side of the wall portion; and the body is connected to the electrode lead-out portion, the elastic portion is welded to the tab, and the elastic portion is configured to elastically deform relative to the body when the electrode assembly moves relative to the electrode lead-out portion.

In the above technical solution, the wall portion of the housing assembly is provided with an electrode lead-out hole for mounting the electrode lead-out portion, and at least a part of the electrode lead-out portion protrudes from the outer side of the wall portion, so that electrical energy can be input or output through the electrode lead-out portion. The elastic portion can elastically deform relative to the body when the electrode assembly moves relative to the housing assembly, so that the cushion effect between the electrode assembly and the housing assembly can be achieved, and the elastic deformation of the elastic portion can provide a space margin for the tab to move relative to the body. This reduces the rigid pulling between the tab and the body to achieve the flexible connection between the tab and the electrode lead-out portion. This structure is simple and easy to implement.

In some embodiments, the electrode lead-out portion is connected to a central position of the body.

In the above technical solution, the electrode lead-out portion is connected to the central position of the body. This facilitates processing and production on one hand, and on the other hand, enables the elastic portion to circumferentially surround the electrode lead-out portion, so that the current of the electrode assembly can converge uniformly from a circumferential direction of the electrode lead-out portion to the electrode lead-out portion through the elastic portion, thereby helping to improve the current flow effect.

In some embodiments, the elastic portion extends along a radial direction of the body; an end of the elastic portion farther away from a central position of the body is connected to the body, and an end of the elastic portion closer to the central position of the body is a free end.

In the above technical solution, the end of the elastic portion farther away from the central position of the body is connected to the body, and the other end is set as a free end so as to facilitate the elastic deformation of the elastic portion relative to the body. The current collecting member of this structure facilitates the processing of the elastic portion because an area of an outer peripheral side of the body is larger than an area of the central position, helping to reduce the processing difficulty and enhance the deformation of the elastic portion.

In some embodiments, the elastic portion is welded to the tab to form a weld mark, and the weld mark extends along a radial direction of the body.

In the above technical solution, the weld marks formed by the elastic portion and the tab are arranged along the radial direction of the body to increase a connection area between the tab and the elastic portion. This is conducive to increasing a current flow area between the tab and the elastic portion so that the current of the electrode assembly can converge uniformly on the current collecting member, reducing the risk of polarization of the battery cell due to uneven current flow.

In some embodiments, the elastic portion is welded to the tab to form a plurality of weld marks; and a plurality of the weld marks are spaced apart along a radial direction of the body, and the weld marks extend along a circumferential direction of the body.

In the above technical solution, the elastic portion and the tab are welded to form a plurality of weld marks spaced apart along the radial direction of the body, and the weld marks extend along the circumferential direction of the body to achieve a surrounding arrangement of the weld marks. This can increase a connection area between the tab and the elastic portion so that a current flow area between the tab and the elastic portion is increased and the current of the electrode assembly can converge uniformly on the current collecting member, reducing the risk of polarization of the battery cell due to uneven current flow.

In some embodiments, the housing assembly has a wall portion, the wall portion being the electrode lead-out portion; and the body is welded to the tab, the elastic portion abuts against the wall portion, and the elastic portion protrudes from a side of the body back away from the tab and is configured to elastically deform relative to the body when the electrode assembly moves relative to the wall portion.

In the above technical solution, the elastic portion abuts against the wall portion of the housing assembly, so that the wall portion of the housing assembly is used as the electrode lead-out portion, to realize the input or output of electrical energy. The elastic portion, which can elastically deform relative to the body, protrudes from a side of the body, and the elastic portion abuts against the wall portion of the housing assembly so that the current collecting member is in elastic contact with the housing assembly, that is, when the current collecting member moves in a direction leaving the tab, the elastic portion is compressed and accumulates elastic force, and when the current collecting member moves in a direction approaching the tab, the elastic portion releases elastic force so that the elastic portion always abuts against the housing. On one hand, the current collecting member of this structure has a better cushioning effect, and the elastic deformation of the elastic portion can provide a space margin for the body to move relative to the wall portion of the housing assembly, so that the body can follow the tab to move in the housing assembly, thereby reducing the rigid pulling between the tab and the body to achieve a flexible connection between the tab and the wall portion of the housing assembly. On the other hand, the process of connecting the elastic portion and the housing assembly is not required, simplifying the production process of the battery cell, thereby helping to improve the production efficiency of the battery cell, facilitating the manufacturing, and helping to reduce the production cost of the battery cell.

In some embodiments, in a radial direction of the body, two ends of the elastic portion are connected to the body, and a middle part of the elastic portion protrudes from the side of the body back away from the tab.

In the above technical solution, two ends of the elastic portion in the radial direction of the body are connected to the body, and the middle part of the elastic portion protrudes from the side of the body back away from the tab, so that the middle part of the elastic portion abuts against the wall portion of the housing assembly. The current collecting member of this structure can improve the connection strength between the elastic portion and the body, and make the elastic portion maintain a better elastic deformation during later use. This reduces the risk of elastic deformation failure of the elastic portion during later use and thus helps to extend the service life of the battery cell.

In some embodiments, the elastic portion has an abutting plane for the wall portion to abut against.

In the above technical solution, the elastic portion is provided with an abutting plane for the wall portion of the housing assembly to abut against, to increase a contact area between the elastic portion and the housing assembly, thus ensuring the current flow performance between the elastic portion and the housing assembly and reducing the risk of temperature rise of the battery cell due to excessive local current between the elastic portion and the housing assembly.

In some embodiments, the body is welded to the tab to form a weld mark, and the weld mark is alternately arranged with the elastic portion along a circumferential direction of the body.

In the above technical solution, the body is connected to the tab to form a plurality of weld marks spaced apart along the circumferential direction of the body. On one hand, a welding area between the body and the tab is increased, improving the connection strength between the body and the tab. On the other hand, uniform current flow between the electrode assembly and the body can be achieved, reducing the risk of temperature rise of the battery cell due to excessive local current, thus helping to improve the service life and use performance of the battery cell.

In some embodiments, the weld mark extends along a radial direction of the body.

In the above technical solution, the weld mark extends along the radial direction of the body to increase the connection area between the body and the tab. On one hand, this can improve the connection strength between the body and the tab. On the other hand, a current flow area between the tab and the body can be increased and the current of the electrode assembly can converge uniformly on the body of the current collecting member, reducing the risk of polarization of the battery cell due to uneven current flow.

In some embodiments, the housing assembly includes a housing and an end cover, where the housing includes a bottom wall and a side wall, the side wall surrounds the bottom wall, one end of the side wall is connected to the bottom wall, the other end of the side wall encloses an opening opposite the bottom wall, the end cover covers the opening, and the wall portion is the bottom wall or the end cover.

In the above technical solution, the housing assembly is provided with the housing and the end cover, one end of the housing forms an opening, and the end cover covers the opening so that the housing assembly can accommodate the electrode assembly. This structure is simple and easy to implement.

According to a second aspect, an embodiment of this application further provides a battery including a box and the foregoing battery cell; and the battery cell is configured to be accommodated in the box.

According to a third aspect, an embodiment of this application also provides an electric apparatus including the foregoing battery.

According to a fourth aspect, an embodiment of this application further provides a battery cell manufacturing method including:
providing a housing assembly, the housing assembly including an electrode lead-out portion for inputting or outputting electrical energy;
providing an electrode assembly, the electrode assembly having a tab;
providing a current collecting member, the current collecting member including a body and an elastic portion connected to the body; and
mounting the electrode assembly in the housing assembly; where
one of the body and the elastic portion is welded to the tab, and the other is electrically connected to the electrode lead-out portion; and
the elastic portion is configured to cushion vibrations between the electrode assembly and the housing assembly.

According to a fifth aspect, an embodiment of this application further provides a battery cell manufacturing device including a first providing means, a second providing means, a third providing means, a first assembly means, and a second assembly means. The first providing means is configured to provide a housing assembly, the housing assembly including an electrode lead-out portion for inputting or outputting electrical energy; the second providing means is configured to provide an electrode assembly, the electrode assembly having a tab; the third providing means is configured to provide a current collecting member, the current collecting member including a body and an elastic portion connected to the body; the first assembly means is configured to mount the electrode assembly in the housing assembly; the second assembly means is configured to weld one of the body and the elastic portion to the tab and electrically connect the other to the electrode lead-out portion; where the elastic portion is configured to cushion vibrations between the electrode assembly and the housing assembly.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a structural exploded view of a battery according to some embodiments of this application;
FIG. 3 is a structural exploded view of a battery cell according to some embodiments of this application;
FIG. 4 is a cross-sectional view of a battery cell according to some embodiments of this application;
FIG. 5 is a schematic structural diagram of a first embodiment of a current collecting member according to some embodiments of this application;
FIG. 6 is a partial enlarged view of position A of the battery cell shown in FIG. 4;
FIG. 7 is a schematic structural diagram of a second embodiment of a current collecting member according to some embodiments of this application;
FIG. 8 is a schematic structural diagram of a third embodiment of a current collecting member according to some embodiments of this application;
FIG. 9 is a schematic structural diagram of a fourth embodiment of a current collecting member according to some embodiments of this application;
FIG. 10 is a partial enlarged view of position B of the battery cell shown in FIG. 4;
FIG. 11 is a schematic structural diagram of a fifth embodiment of a current collecting member according to some embodiments of this application;
FIG. 12 is a cross-sectional view of a fifth embodiment of a current collecting member according to some embodiments of this application;
FIG. 13 is a cross-sectional view of a sixth embodiment of a current collecting member according to some embodiments of this application;
FIG. 14 is a cross-sectional view of a seventh embodiment of a current collecting member according to some embodiments of this application;
FIG. 15 is a schematic flowchart of a battery cell manufacturing method according to some embodiments of this application; and
FIG. 16 is a schematic block diagram of a battery cell manufacturing device according to some embodiments of this application.

Reference signs: 1000. vehicle; 100. battery; 10. box; 11. first part; 12. second part; 20. battery cell; 21. housing assembly; 211. electrode lead-out portion; 212. housing; 213. end cover; 214. sealed space; 22. electrode assembly; 221. tab; 23. current collecting member; 231. body; 2311. through hole; 232. elastic portion; 2321. abutting plane; 233. weld mark; 24. upper plastic; 25. lower plastic; 26. insulator; 200. controller; 300. motor; 2000. manufacturing device; 2100. first providing means; 2200. second providing means; 2300. third providing means; 2400. first assembly means; and 2500. second assembly means.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together.

The separator may be made of PP (polypropylene, polypropylene), PE (polyethylene, polyethylene), or the like. In addition, the electrode assembly may be a wound structure or a stacked structure, but the embodiments of this application are not limited thereto.

With outstanding advantages such as high energy density, low environmental pollution, high power density, long service life, wide application range, and small self-discharge coefficient, lithium-ion batteries have been one of the most widely used batteries in the world today and also an important part of new energy development. With the continuous development of lithium-ion battery technologies, higher requirements have been imposed on the quality and service life of lithium-ion batteries.

The inventors have found that during the use of a battery, because a battery cell of the battery is subj ected to long-term shaking and vibration in the use environment, it often causes an electrode assembly of the battery cell to move in a housing. In the prior art, a tab of an electrode assembly is usually first connected to a current collecting member to realize current flow and convergence functions through a current collecting member, and then connected to an end cover of a housing or an electrode terminal through the current collecting member to realize an electrical connection between the end cover or the electrode terminal and the tab of the electrode assembly. However, when the electrode assembly of the battery cell of this structure moves, rigid collisions occur between the electrode assembly and the housing, which is unfavorable for the long-term use of the electrode assembly. In addition, a connection between the tab and the end cover or between the tap and the electrode terminal is rigid, so that rigid pulling occurs between the tab and the end cover or the electrode terminal when the electrode assembly moves. This can easily cause detachment or fracture of the tab, resulting in an electrical connection failure of the battery cell, thereby affecting the service life of the battery.

Based on the above considerations, to solve the problem of the short service life of the battery, the inventors, after thorough research, have designed a battery cell, where a housing assembly has an electrode lead-out portion for inputting or outputting electrical energy, and an electrode assembly provided in the housing assembly has a tab, and the tab is electrically connected to an electrode lead-out portion through a current collecting member. The current collecting member includes a body and an elastic portion connected to the body. One of the body and the elastic portion is welded to the tab, and the other is electrically connected to the electrode lead-out portion, so that the elastic portion cushions vibrations between the electrode assembly and the housing assembly when the electrode assembly moves relative to the housing assembly.

The battery cell of this structure achieves a cushioning effect between the electrode assembly and the housing assembly through the elastic portion of the current collecting member, greatly reducing the rigid collisions between the electrode assembly and the housing assembly when the electrode assembly moves in the housing, thus protecting the electrode assembly to some extent and facilitating the long-term use of the battery cell.

In addition, the body and the elastic portion of the current collecting member are connected to the tab and the electrode lead-out portion respectively, so that the flexible connection between the tab and the electrode lead-out portion can effectively alleviate the rigid pulling between the tab and the current collecting member when the electrode assembly moves relative to the housing assembly. This is conducive to reducing the phenomenon of detachment or fracture of the tab, greatly reducing the risk of electrical connection failure of the battery cell, thereby effectively extending the service life of the battery cell and improving the use performance of the battery cell.

The battery cell disclosed in the embodiments of this application may be used without limitation in electric apparatuses such as vehicles, ships, or aircrafts. The battery cell, battery, and the like disclosed in this application may be used to constitute a power supply system of that electric apparatus, so that the service life and use performance of the battery can be effectively improved.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

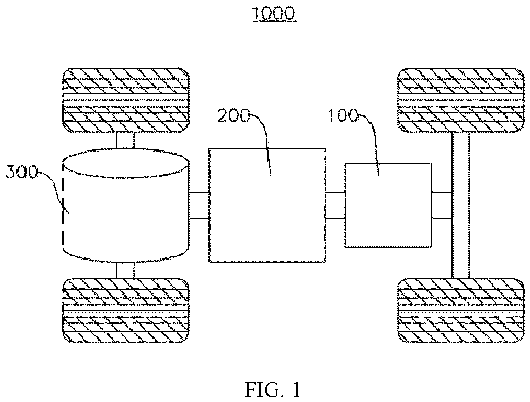

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 can be provided at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

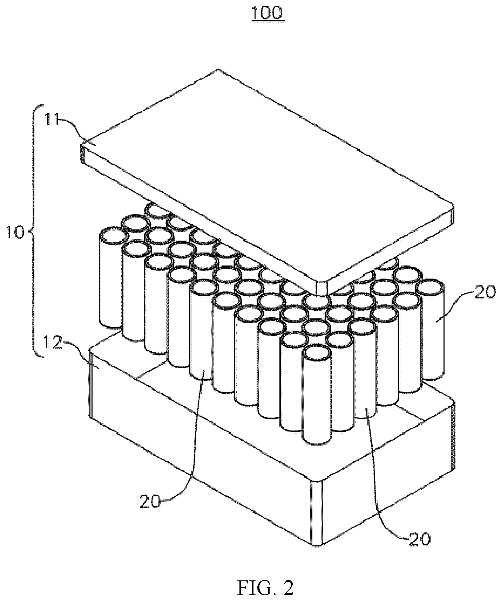

Referring to FIG. 2, FIG. 2 is a structural exploded view of the battery 100 according to some embodiments of this application. The battery 100 includes a box 10 and a battery cell 20, and the battery cell 20 is configured to be accommodated in the box 10. The box 10 is configured to provide an accommodating space for the battery cell 20, and the box 10 may be various structures. In some embodiments, the box 10 may include a first part 11 and a second part 12. The first part 11 and the second part 12 fit together so that the first part 11 and the second part 12 jointly define an accommodating space for accommodating the battery cell 20. The second part 12 may be a hollow structure with an opening at one end, and the first part 11 may be a plate-shaped structure. The first part 11 covers the opening side of the second part 12, so that the first part 11 and the second part 12 jointly define the accommodating space. Alternatively, both the first part 11 and the second part 12 may be hollow structures with an opening at one side, and the opening side of the first part 11 fits with the opening side of the second part 12. The box 10 formed by the first part 11 and the second part 12 may be of various shapes, such as cylinder or cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery and may be a lithium-sulfur battery, a sodium-ion battery, or a magnesium-ion battery, without being limited thereto. The battery cell 20 may be cylindrical, flat, cuboid, or of other shapes. For example, in FIG. 2, the battery cell 20 is cylindrical.

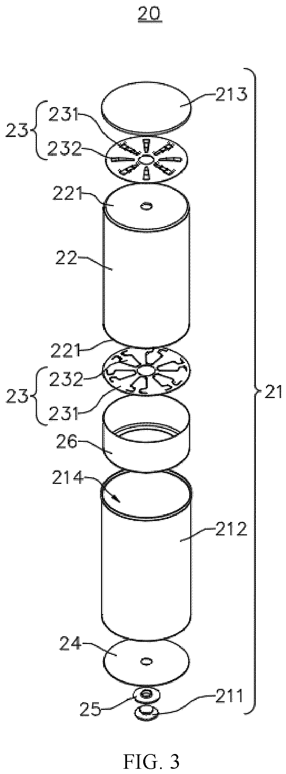

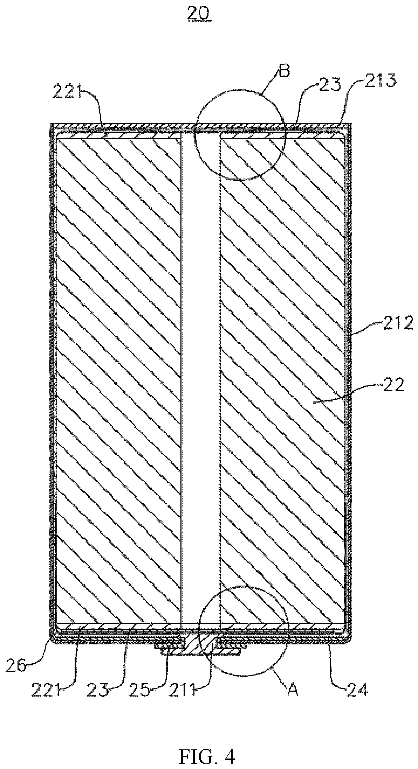

According to some embodiments of this application, referring to FIGs. 3 and 4. FIG. 3 is a structural exploded view of the battery cell 20 according to some embodiments of this application, and FIG. 4 is a cross-sectional view of the battery cell 20 according to some embodiments of this application. This application provides a battery cell 20. The battery cell 20 includes a housing assembly 21, an electrode assembly 22, and a current collecting member 23. The housing assembly 21 includes an electrode lead-out portion 211 for inputting or outputting electrical energy. The electrode assembly 22 is provided in the housing assembly 21, and the electrode assembly 22 has a tab 221. The current collecting member 23 is provided in the housing assembly 21, and the current collecting member 23 is configured to electrically connect the tab 221 and the electrode lead-out portion 211. The current collecting member 23 includes a body 231 and an elastic portion 232 connected to the body 231. One of the body 231 and the elastic portion 232 is welded to the tab 221 and the other is electrically connected to the electrode lead-out portion 211, and the elastic portion 232 is configured to cushion vibrations between the electrode assembly 22 and the housing assembly 21.

One of the body 231 and the elastic portion 232 is electrically connected to the electrode lead-out portion 211, that is, one of the body 231 and the elastic portion 232 may be welded to or in contact with the electrode lead-out portion 211. Certainly, one of the body 231 and the elastic portion 232 may be welded to or in contact with another part first and then electrically connected to the electrode lead-out portion 211 to achieve current conduction between the electrode lead-out portion 211 and one of the body 231 and the elastic portion 232.

For example, the elastic portion 232 is welded to the tab 221 by laser.

The elastic portion 232 may be of various structures. For example, the elastic portion 232 is a spring, V-shape spring leaf, or S-shape spring leaf structure. One end of the elastic portion 232 is welded to the body 231 and the other end is electrically connected to the electrode lead-out portion 211 to achieve a cushion effect between the electrode assembly 22 and the housing assembly 21.

The electrode assembly 22 has positive and negative electrodes for inputting or outputting electrical energy to realize a power supply function of the battery cell 20. The current collecting member 23 is a component for connecting the tab 221 and the electrode lead-out portion 211 to achieve an electrical connection between the tab 221 and the electrode lead-out portion 211.

The battery cell 20 may be of various structures. For example, in FIG. 3, the battery cell 20 includes two current collecting members 23. Correspondingly, two ends of the electrode assembly 22 are both provided with tabs 221 (the two tabs 221 are respectively a part of positive electrode plate of the electrode assembly 22 that is uncoated with a positive electrode active substance layer and a part of negative electrode plate of the electrode assembly 22 that is uncoated with a negative electrode active substance layer, that is, the two tabs 221 are connected to a positive electrode current collector of the positive electrode plate and a negative electrode current collector of the negative electrode plate, respectively, so that the two tabs 221 can output positive electrical energy and negative electrical energy of the electrode assembly 22, respectively). The housing assembly 21 includes two electrode lead-out portions 211 (the two electrode lead-out portions 211 are configured to input or output positive electrical energy and negative electrical energy of the battery cell 20, respectively). Each current collecting member 23 is configured to electrically connect one tab 221 and one electrode lead-out portion 211. Certainly, in another embodiment, the battery cell 20 may alternatively include only one current collecting member 23, and the current collecting member 23 may be connected between the tab 221 of the positive electrode current collector of the positive electrode plate and the electrode lead-out portion 211 for inputting or outputting the positive electrical energy of the battery cell 20, so as to achieve an electrical connection between the tab 221 of the positive electrode current collector of the positive electrode plate and the electrode lead-out portion 211 for inputting or outputting the negative electrode electrical energy of the battery cell 20, or may be connected between the tab 221 of the negative electrode current collector of the negative electrode plate and the electrode lead-out portion 211 of the battery cell 20 for inputting or outputting the negative electrode electrical energy to achieve the electrical connection between the tab 221 of the negative electrode current collector of the negative electrode plate and the electrode lead-out portion 211 for inputting or outputting the negative electrode electrical energy of the battery cell 20.

Optionally, the housing assembly 21 may also be configured to accommodate an electrolyte, such as a liquid electrolyte. The housing assembly 21 may be in a variety of structural forms. The housing assembly 21 may also be made of a variety of materials, such as copper, iron, aluminum, steel, aluminum, and alloy.

In some embodiments, the housing assembly 21 may include a housing 212 and an end cover 213. The housing 212 is a hollow structure with an opening on one side and the end cover 213 covers the opening of the housing 212 to form a hermetical connection so as to form a sealed space 214 for accommodating the electrode assembly 22 and the electrolyte.

During assembly of the battery cell 20, first, the electrode assembly 22 can be placed in the housing 212 and the electrolyte is filled into the housing 212, and then the end cover 213 covers the opening of the housing 212.

The housing 212 may be of various shapes, such as cylinder or cuboid. The shape of the housing 212 may be determined based on a specific shape of the electrode assembly 22. For example, if the electrode assembly 22 is a cylindrical structure, a cylindrical housing 212 may be used. If the electrode assembly 22 is a cuboid structure, a cuboid housing 212 may be used. Certainly, the end cover 213 may also be various structures. For example, the end cover 213 is a plate-shaped structure or a hollow structure with an opening at one end. For example, in FIG. 3, the electrode assembly 22 is a cylindrical structure, and the housing 212 is a cylindrical housing 212.

It can be understood that the housing assembly 21 is not limited to the above structures. The housing assembly 21 may alternatively be another structure. For example, the housing assembly 21 includes a housing 212 and two end covers 213, the housing 212 is a hollow structure with openings on opposite sides, and one end cover 213 correspondingly covers one opening of the housing 212 to form a hermetical connection so as to form a sealed space 214 for accommodating the electrode assembly 22 and the electrolyte.

The electrode assembly 22 is a component in the battery cell 20 where an electrochemical reaction occurs. The electrode assembly 22 may include a positive electrode plate, a negative electrode plate, and a separator. The electrode assembly 22 may be a wound structure formed by winding the positive electrode plate, the separator, and the negative electrode plate, or may be a laminated structure formed by laminating the positive electrode plate, the separator, and the negative electrode plate. For example, in FIG. 3, the electrode assembly 22 is a wound structure formed by winding the positive electrode plate, the separator, and the negative electrode plate.

In some embodiments, the battery cell 20 may alternatively include a pressure relief mechanism, and the pressure relief mechanism is entirely mounted on the end cover 213. The pressure relief mechanism is configured to relieve the internal pressure of the battery cell 20 when the internal pressure or temperature of the battery cell 20 reaches a predetermined value.

For example, the pressure relief mechanism may be a component such as an explosion-proof valve, a rupture disc, a gas valve, a pressure relief valve, or a safety valve.

On one hand, the battery cell 20 of this structure can greatly alleviate the rigid collisions between the electrode assembly 22 and the electrode lead-out portion 211 when the electrode assembly 22 moves in the housing assembly 21, thus protecting the electrode assembly 22 to some extent, which is conducive to the long-term use of the battery cell 20. On the other hand, the flexible connection between the tab 221 and the electrode lead-out portion 211 can effectively alleviate the rigid pulling between the tab 221 and the current collecting member 23 when the electrode assembly 22 moves relative to the housing assembly 21, helping to reduce detachment or fracture of the tab 221, greatly reducing the risk of electrical connection failure of the battery cell 20, thus effectively extending the service life of the battery cell 20 and improving the use performance of the battery cell 20.

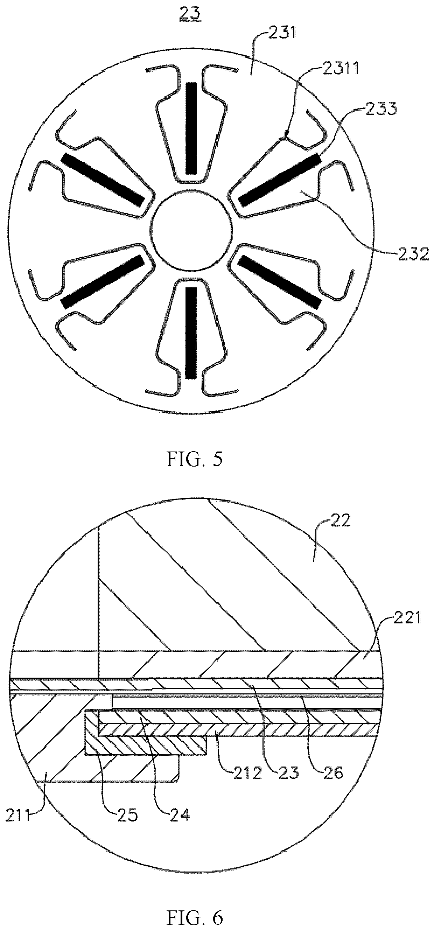

According to some embodiments of this application, referring to FIGs. 3 and 4, and further referring to FIG. 5, FIG.5 is a schematic structural diagram of a first embodiment of a current collecting member 23 according to some embodiments of this application. The current collecting member 23 includes a plurality of elastic portions 232, and the plurality of elastic portions 232 are spaced apart on the body 231 along a circumferential direction of the body 231.

Optionally, the elastic portion 232 provided on the body 231 may be provided in a quantity of two, three, four, five, or the like. For example, in FIG. 5, six elastic portions 232 are provided on the body 231.

It should be noted that the body 231 may be various structures, such as a circular or rectangular structure. For example, in FIG. 5, the body 231 is a circular structure. The plurality of elastic portions 232 are spaced apart on the body 231 along the circumferential direction of the body 231, that is, the plurality of elastic portions 232 are spaced apart on the body 231 by surrounding a central position of the body 231, in other words, the circumferential direction of the body 231 is a direction encircling the central position of the body 231.

The plurality of elastic portions 232 are provided on the body 231, and the plurality of elastic portions 232 are circumferentially spaced apart on the body 231. On one hand, the battery cell 20 of this structure can improve the cushion effect between the electrode assembly 22 and the housing assembly 21, thereby helping to improve the protective effect on the electrode assembly 22. On the other hand, uniform current flow is achieved between the elastic portions 232 and the body 231, thereby reducing the risk of temperature rise of the battery cell 20 due to excessive local current. In addition, the cushioning effect of the current collecting member 23 is not affected in the event of damage to one of the plurality of elastic portions 232, thereby helping to improve the service life of the battery cell 20 and reduce the post-maintenance cost of the battery cell 20.

According to some embodiments of this application, continuing to refer to FIG. 5, a plurality of through holes 2311 are provided in the body 231, and the plurality of through holes 2311 are spaced apart along the circumferential direction of the body 231. The elastic portions 232 are provided in correspondence with the through holes 2311, and the elastic portion 232 is connected to a hole wall of the through hole 2311.

Each elastic portion 232 is provided in correspondence with one through hole 2311 and the elastic portion 232 is connected to a hole wall of the through hole 2311, so that the elastic portion 232 can not only protrude from two sides of the body 231 but also retract in the through hole 2311 of the body 231 when cushioning vibrations between the electrode assembly 22 and the housing assembly 21, thus a cushioning region range of the elastic portion 232 can be widened, which in turn is conducive to improving the cushioning effect between the electrode assembly 22 and the housing assembly 21.

According to some embodiments of this application, the body 231 is integrally formed with the elastic portion 232.

The body 231 is integrally formed with the elastic portion 232, that is, the body 231 and the elastic portion 232 are an integral structure. In another embodiment, the elastic portion 232 and the body 231 may alternatively be of a separate structure, and the elastic portion 232 is connected to the body 231 by welding or the like.

For example, the elastic portion 232 is formed by a stamping process, that is, the elastic portion 232 is obtained by stamping on the body 231, and the unbroken portion between the elastic portion 232 and the body 231 achieves the connection of the elastic portion 232 to the body 231. In another embodiment, the elastic portion 232 may alternatively be formed by a cutting process. For example, a plurality of elastic portions 232 are cut out of the body 231, and the unbroken portion between the elastic portion 232 and the body 231 achieves the connection of the elastic portion 232 to the body 231.

The current collecting member 23 of this structure is used. On one hand, this can improve the connection strength between the elastic portion 232 and the body 231, so that the connection reliability between the elastic portion 232 and the body 231 can be improved when the elastic portion 232 cushions vibrations between the electrode assembly 22 and the housing assembly 21. On the other hand, this is conducive to facilitating the processing of the elastic portion 232 on the body 231, facilitating the manufacturing and reducing the production cost of the battery cell 20.

According to some embodiments of this application, referring to FIG. 5 and further referring to FIG. 6, FIG. 6 is a partial enlarged view of position A of the battery cell 20 shown in FIG. 4. The housing assembly 21 has a wall portion, the wall portion is provided with an electrode lead-out hole, the electrode lead-out portion 211 is mounted in the electrode lead-out hole, and at least a part of the electrode lead-out portion 211 protrudes from an outer side of the wall portion. The body 231 is connected to the electrode lead-out portion 211, the elastic portion 232 is welded to the tab 221, and the elastic portion 232 is configured to elastically deform relative to the body 231 when the electrode assembly 22 moves relative to the electrode lead-out portion 211.

The housing 212 of the housing assembly 21 includes a bottom wall and a side wall, the side wall surrounds the bottom wall, one end of the side wall is connected to the bottom wall and the other end of the side wall encloses an opening opposite the bottom wall, and the end cover 213 covers the opening. The wall portion may be the bottom wall or the side wall of the housing 212 or may be the end cover 213.

Optionally, the elastic portion 232 may be a strip spring leaf structure connected to the body 231, and the part of the elastic portion 232 connected to the body 231 is narrower than the part of the elastic portion 232 welded to the tab 221. The current collecting member 23 of this structure is used. On one hand, this facilitates the elastic deformation of the elastic portion 232 relative to the body 231. On the other hand, this can effectively ensure an area of the elastic portion 232, so as to facilitate the welding of the elastic portion 232 to the tab 221, helping to reduce the welding difficulty.

For example, the wall portion is a bottom wall at an end of the housing 212 away from the end cover 213, the electrode lead-out portion 211 is an electrode terminal mounted at the end of the housing 212 away from the end cover 213 and protrudes from an outer side of the housing 212, and the body 231 is connected to a part of the electrode lead-out portion 211 located inside the housing 212 to achieve input and output of electrical energy. Certainly, in another embodiment, the body 231 may alternatively be directly welded to or abut against the bottom wall or side wall of the housing 212 so that the housing 212 acts as the electrode lead-out portion 211 to achieve input and output of electrical energy. In the battery cell 20 of this structure, the electrode lead-out portion 211 is mounted on the housing 212 in an insulating manner, that is, the electrode lead-out portion 211 is connected to the housing 212, but the electrode lead-out portion 211 is connected to the housing 212 in an insulating manner, in other words, no electrical conduction is formed between the electrode lead-out portion 211 and the housing 212. For example, referring to FIGs. 3 and 6, the electrode lead-out portion 211 is riveted to the end of the housing 212 away from the end cover 213. The battery cell 20 may alternatively include an upper plastic 24 and a lower plastic 25. The upper plastic 24 and the lower plastic 25 are respectively provided on two sides of the housing 212 in its thickness direction to isolate the electrode lead-out portion 211 from the housing 212, so that the electrode lead-out portion 211 is mounted on the housing 212 of the housing assembly 21 in an insulating manner.

In some embodiments, the battery cell 20 may further include an insulator 26. The insulator 26 is provided on an outer peripheral side of the tab 221 and the current collecting member 23 to separate the housing 212 of the housing assembly 21 from the tab 221 and the current collecting member 23, thereby achieving electrical insulation of the housing 212 of the housing assembly 21 from the tab 221 and the current collecting member 23.

For example, the insulator 26 is an insulating adhesive with adhesive properties.

The elastic portion 232 of the current collecting member 23 of this structure can elastically deform relative to the body 231 when the electrode assembly 22 moves relative to the housing assembly 21, so that the cushion effect between the electrode assembly 22 and the housing assembly 21 can be achieved. In addition, the elastic deformation of the elastic portion 232 can provide a space margin for the tab 221 to move relative to the body 231. This reduces the rigid pulling between the tab 221 and the body 231 to achieve the flexible connection between the tab 221 and the electrode lead-out portion 211. This structure is simple and easy to implement.

According to some embodiments of this application, the electrode lead-out portion 211 is connected to a central position of the body 231.

The electrode lead-out portion 211 being connected to the central position of the body 231 means that the electrode lead-out portion 211 is connected to a center of the body 231 where the plurality of elastic portions 232 are arranged circumferentially. The central position of the body 231 is a position where a geometric center of the body 231 is located. For example, if the body 231 is a circular structure, the central position of the body 231 is a round point of the circular structure. If the body 231 is a rectangular structure, the central position of the body 231 is an intersection of diagonals of the rectangular structure.

For example, the body 231 is welded to the electrode lead-out portion 211 by laser.

The electrode lead-out portion 211 is connected to the central position of the body 231.On one hand, this facilitates the processing and production. On the other hand, this makes the elastic portion 232 circumferentially surround the electrode lead-out portion 211 so that the current of the electrode assembly 22 can converge uniformly from a circumferential direction of the electrode lead-out portion 211 to the electrode lead-out portion 211 through the elastic portion 232, helping to improve the current flow effect.

According to some embodiments of this application, referring to FIG. 5, the elastic portion 232 extends along a radial direction of the body 231. An end of the elastic portion 232 farther away from the central position of the body 231 is connected to the body 231, and an end of the elastic portion 232 closer to the central position of the body 231 is a free end.

The elastic portion 232 extends along the radial direction of the body 231, that is, the extension direction of the elastic portion 232 passes through the central position of the body 231. In other words, the extension direction of the elastic portion 232 points from an edge of the body 231 to the central position of the body 231 or from the central position of the body 231 to an edge of the body 231. The end of the elastic portion 232 farther away from the central position of the body 231 is connected to the body 231, and the other end is provided as a free end, so as to facilitate the elastic deformation of the elastic portion 232 relative to the body 231. In other words, a region of the elastic portion 232 that deforms elastically relative to the body 231 is away from the central position of the body 231.

The outer contour of the elastic portion 232 fits the shape of the through hole 2311 so that the elastic portion 232 is accommodated in a corresponding through hole 2311 when the elastic portion 232 undergoes no elastic deformation, and when the elastic portion 232 elastically deforms, the free end of the elastic portion 232 can protrude from a side of the body 231 facing the tab 221 to achieve a flexible connection between the tab 221 and the body 231.

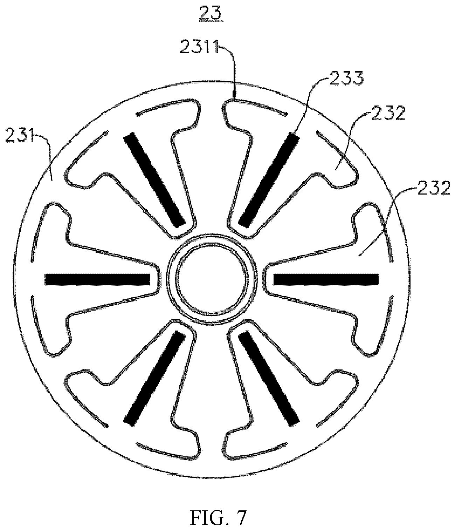

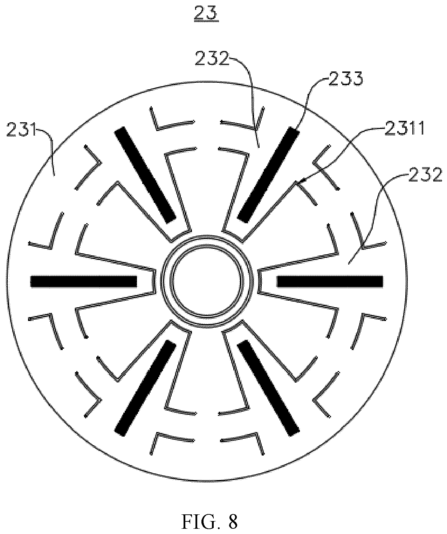

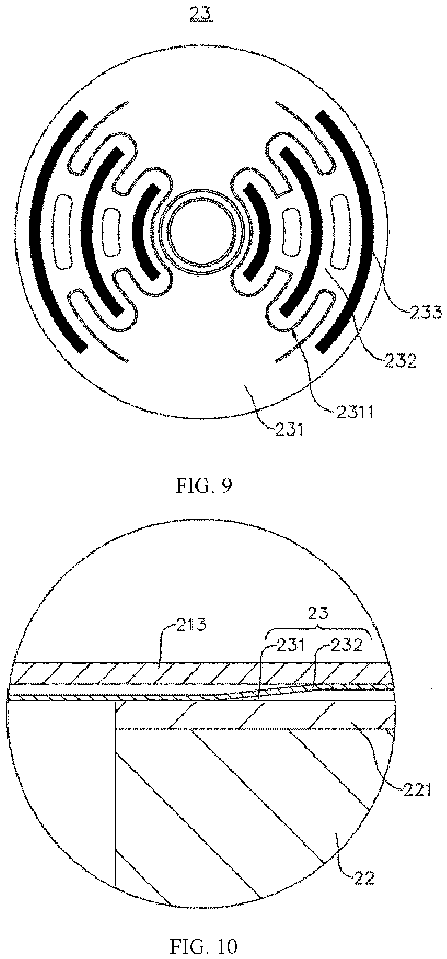

Optionally, the elastic portion 232 may be of various shapes. For example, referring to FIGs. 7, 8, and 9, FIG. 7 is a schematic structural diagram of a second embodiment of a current collecting member 23 according to some embodiments of this application, FIG. 8 is a schematic structural diagram of a third embodiment of a current collecting member 23 according to some embodiments of this application, and FIG. 9 is a schematic structural diagram of a fourth embodiment of a current collecting member 23 according to some embodiments of this application. The outer contour of the elastic portion 232 fits the shape of the hole wall of the through hole 2311, and the elastic portion 232 is partially connected to the hole wall of the through hole 2311 so that the elastic portion 232 can not only be accommodated in the through hole 2311 but also protrude from two sides of the body 231 when elastic deformation occurs relative to the body 231.

The current collecting member 23 of this structure facilitates the processing of the elastic portion 232 because an area of an outer peripheral side of the body 231 is larger than an area of the central position, helping to reduce the processing difficulty and enhance the deformation of the elastic portion 232.

According to some embodiments of this application, referring to FIGs. 5, 7, and 8, the elastic portion 232 is welded to the tab 221 to form a weld mark 233, and the weld mark 233 extends along a radial direction of the body 231.

The plurality of elastic portions 232 are circumferentially provided on the body 231, and each elastic portion 232 is welded to the tab 221 to form a weld mark 233, and the weld mark 233 extends along the radial direction of the body 231 so that the weld marks 233 form a radial structure. It should be noted that one part of the weld mark 233 formed by the elastic portions 232 and the tab 221 may be located on the elastic portion 232 and the other part thereof may be located on the body 231, or the weld mark 233 may be all located on the elastic portion 232.

The weld marks 233 formed by the elastic portion 232 and the tab 221 are arranged along the radial direction of the body 231 to increase a connection area between the tab 221 and the elastic portion 232. This is conducive to increasing a current flow area between the tab 221 and the elastic portion 232 so that the current of the electrode assembly 22 can converge uniformly on the current collecting member 23, reducing the risk of polarization of the battery cell 20 due to uneven current flow.

According to some embodiments of this application, referring to FIG. 9, the elastic portion 232 is welded to the tab 221 to form a plurality of weld marks 233, the plurality of weld marks 233 are spaced apart along the radial direction of the body 231, and the weld marks 233 extend along the circumferential direction of the body 231.

For example, two elastic portions 232 are provided on the body 231, and the two elastic portions 232 are arranged opposite each other on the body 231; and three weld marks 233 are formed on each elastic portion 232. In another embodiment, the weld marks 233 formed on the elastic portions 232 may alternatively be in a quantity of two, four, five, or the like.

The elastic portion 232 is welded to the tab 221 to form a plurality of weld marks 233 spaced apart along the radial direction of the body 231, and the weld marks 233 extend along a circumferential direction of the body 231, to achieve a surrounding arrangement of the weld marks 233. This can increase a connection area between the tab 221 and the elastic portion 232 so that a current flow area between the tab 221 and the elastic portion 232 can be increased and the current of the electrode assembly 22 can converge uniformly on the current collecting member 23, reducing the risk of polarization of the battery cell 20 due to uneven current flow.

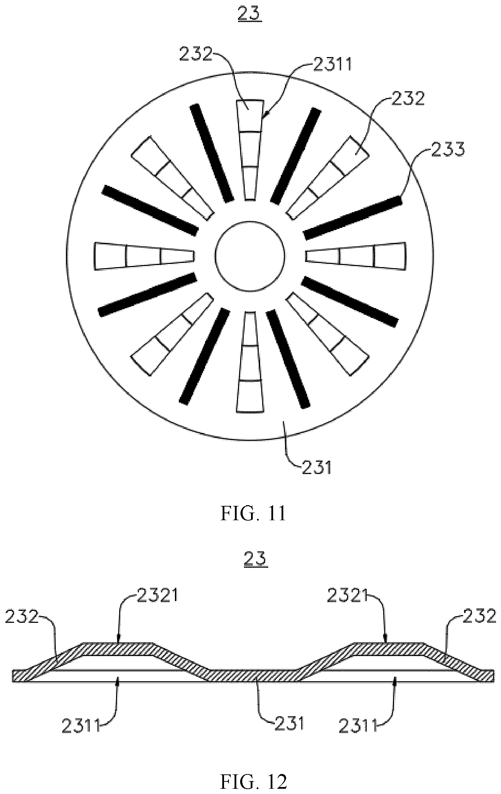

According to some embodiments of this application, referring to FIG. 10, 11, and 12, FIG. 10 is a partial enlarged view of position B of the battery cell 20 in FIG. 4, FIG. 11 is a schematic structural diagram of a fifth embodiment of a current collecting member 23 according to some embodiments of this application, and FIG. 12 is a cross-sectional view of a fifth embodiment of a current collecting member 23 according to some embodiments of this application. The housing assembly 21 has a wall portion, and the wall portion is the electrode lead-out portion 211. The body 231 is welded to the tab 221 and the elastic portion 232 abuts against the wall portion, the elastic portion 232 protrudes from a side of the body 231 back away from the tab 221 and is configured to elastically deform relative to the body 231 when the electrode assembly 22 moves relative to the wall portion.

Optionally, the wall portion is an end cover 213, the body 231 of the current collecting member 23 is welded to the tab 221, and the elastic portion 232 of the current collecting member 23 elastically abuts against the end cover 213 to achieve input and output of electrical energy. Certainly, in another embodiment, the wall portion may alternatively be a bottom wall of an end of the housing 212 farther away from the end cover 213. It should be noted that the electrode lead-out portion 211 may alternatively be an electrode terminal mounted on the wall portion, and the electrode terminal is used to input or output electrical energy. Certainly, in another embodiment, the battery cell 20 may alternatively be another structure. For example, the body 231 is welded to the tab 221, and the elastic portion 232 may either be welded to the end cover 213 or be welded or abut against a side wall of the housing 212, so that the elastic portion 232 and the end cover 213 are electrically connected indirectly through the side wall of the housing 212.

It can be seen from FIGs. 10 and 11 that the body 231 is welded to the tab 221 and the elastic portion 232 protrudes from a side of the body 231 back away from the tab 221, so that the elastic portion 232 can abut against the end cover 213 of the housing assembly 21, thereby achieving an electrical connection between the electrode assembly 22 and the end cover 213 of the housing assembly 21 through the current collecting member 23.

The elastic portion 232 abuts against the wall portion of the housing assembly 21 so as to use the wall portion of the housing assembly 21 as the electrode lead-out portion 211, to realize the input or output of electrical energy. The elastic portion 232, which is capable of elastically deforming relative to the body 231, protrudes from one side of the body 231, and the elastic portion 232 abuts against the wall portion of the housing assembly 21 so that the current collecting member 23 is in elastic contact with the housing assembly 21, that is, the elastic portion 232 is compressed and accumulates elastic force when the current collecting member 23 moves in a direction leaving the tab 221, and the elastic portion 232 releases elastic force when the current collecting member 23 moves in a direction approaching the tab 221 so that the elastic portion 232 always abuts against the housing.

On one hand, the current collecting member 23 of this structure has a better cushioning effect, and the elastic deformation of the elastic portion 232 can provide a space margin for the body 231 to move relative to the wall portion of the housing assembly 21 so that the body 231 can follow the tab 221 to move in the housing assembly 21, thereby reducing the rigid pulling between the tab 221 and the body 231 to achieve a flexible connection between the tab 221 and the wall portion of the housing assembly 21. On the other hand, the process of connecting the elastic portion 232 and the housing assembly 21 is not required, simplifying the production process of the battery cell 20, thereby helping to improve the production efficiency of the battery cell 20, facilitating the manufacturing, and helping to reduce the production cost of the battery cell 20.

According to some embodiments of this application, referring to FIGs. 11 and 12, two ends of the elastic portion 232 in a radial direction of the body 231 are connected to the body 231, and a middle part of the elastic portion 232 protrudes from a side of the body 231 back away from the tab 221.

The elastic portions 232 are provided in correspondence with the through holes 2311, the projection of the elastic portion 232 in a thickness direction of the body 231 is at least partially located in the through hole 2311, and the two ends of the elastic portion 232 in the radial direction of the body 231 are respectively connected to two hole walls of the through hole 2311 that are opposite in the radial direction of the body 231.

In another embodiment, the current collecting member 23 may alternatively be of another structure. For example, in the radial direction of the body 231, one end of the elastic portion 232 is connected to the hole wall of the through hole 2311, and the other end is a free end. The free end of the elastic portion 232 protrudes from the side of the body 231 back away from the tab 221, so that the elastic portion 232 can elastically abut against the end cover 213 of the housing assembly 21.

The two ends of the elastic portion 232 in the radial direction of the body 231 are connected to the body 231, and the middle part of the elastic portion 232 protrudes from the side of the body 231 back away from the tab 221, so that the middle part of the elastic portion 232 can abut against the wall portion of the housing assembly 21. The current collecting member 23 of this structure can improve the connection strength between the elastic portion 232 and the body 231, and the elastic portion 232 can maintain a better elastic deformation capacity during later use, thereby reducing the risk of elastic deformation failure of the elastic portion 232 during later use, helping to extend the service life of the battery cell 20.

According to some embodiments of this application, referring to FIG. 12, the elastic portion 232 has an abutting plane 2321 for the wall portion to abut against.

The elastic portion 232 has the abutting plane 2321 for the wall portion of the housing assembly 21 to abut against, that is, a part of the elastic portion 232 protruding from the body 231 is in surface contact with the wall portion of the housing assembly 21. For example, in FIG. 12, the elastic portion 232 is a trapezoidal spring leaf structure, and two ends of the elastic portion 232 are all connected to the body 231.

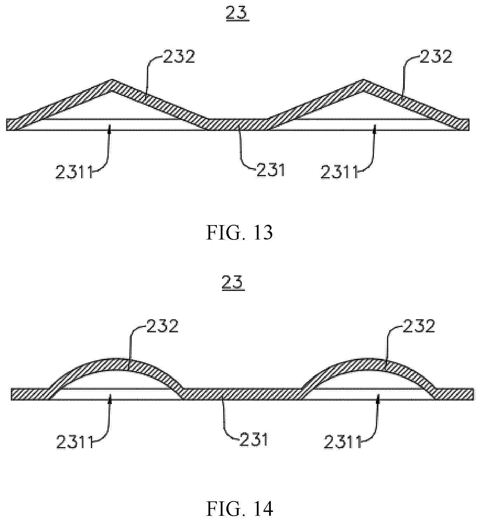

Certainly, the elastic portion 232 is not limited to this structure. In another embodiment, the elastic portion 232 may alternatively be another structure. For example, referring to FIGs. 13 and 14, FIG. 13 is a cross-sectional view of a sixth embodiment of a current collecting member 23 according to some embodiments of this application, and FIG. 14 is a cross-sectional view of a seventh embodiment of a current collecting member 23 according to some embodiments of this application. In FIG. 13, the elastic portion 232 is a V-shaped spring leaf structure, and in FIG. 14, the elastic portion 232 is a circular spring leaf structure.

The abutting plane 2321 is provided on the elastic portion 232 for the wall portion of the housing assembly 21 to abut against, to increase a contact area between the elastic portion 232 and the housing assembly 21, ensuring the current flow performance between the elastic portion 232 and the housing assembly 21 and reducing the risk of temperature rise in the battery cell 20 due to an excessive local current between the elastic portion 232 and the housing assembly 21.

According to some embodiments of this application, referring to FIG. 11, the body 231 is welded to the tab 221 to form a weld mark 233, and the weld mark 233 is alternately arranged with the elastic portion 232 along a circumferential direction of the body 231.

The weld mark 233 being arranged alternately with the elastic portion 232 along the circumferential direction of the current collecting member 23 means that one weld mark 233 is provided between every two adjacent elastic portions 232 along the circumferential direction of the body 231.

The body 231 is welded to the tab 221 to form a plurality of weld marks 233 spaced apart along the circumferential direction of the body 231. On one hand, a welding area between the body 231 and the tab 221 is increased, improving the connection strength between the body 231 and the tab 221. On the other hand, uniform current flow between the electrode assembly 22 and the body 231 can be achieved, reducing the risk of temperature rise of the battery cell 20 due to excessive local current, thus helping to improve the service life and use performance of the battery cell 20.

According to some embodiments of this application, continuing to refer to FIG. 11, the weld mark 233 extends along a radial direction of the body 231.

The weld mark 233 extends along the radial direction of the body 231 to increase a connection area between the body 231 and the tab 221. On one hand, this can improve the connection strength between the body 231 and the tab 221. On the other hand, a current flow area between the tab 221 and the body 231 can be increased and the current of the electrode assembly 22 can converge uniformly on the body 231 of the current collecting member 23, reducing the risk of polarization of the battery cell 20 due to uneven current flow.

According to some embodiments of this application, referring to FIG. 3, the housing assembly 21 includes a housing 212 and an end cover 213. The housing 212 includes a bottom wall and a side wall, the side wall surrounds the bottom wall, one end of the side wall is connected to the bottom wall, and the other end of the side wall encloses an opening opposite the bottom wall, the end cover 213 covers the opening, and the wall portion is the bottom wall or the end cover 213.

The housing assembly 21 is provided with the housing 212 and the end cover 213, one end of the housing 212 forms an opening, and the end cover 213 covers the opening to enable the housing assembly 21 to accommodate the electrode assembly 22. This structure is simple and easy to implement.

According to some embodiments of this application, this application further provides a battery 100 including a box 10 and the battery cell 20 in any one of the foregoing solutions, and the battery cell 20 is configured to be accommodated in the box 10.

According to some embodiments of this application, this application further provides an electric apparatus including the battery 100 in any one of the foregoing solutions. The battery 100 is configured to supply electrical energy to the electric apparatus.

The electric apparatus may be any one of the foregoing devices or systems using the battery 100.

According to some embodiments of this application, referring to FIGs. 3 to 5 and FIG. 11, this application provides a battery cell 20 including a housing assembly 21, an electrode assembly 22, and two current collecting members 23. The housing assembly 21 includes an electrode lead-out portion 211, a housing 212, and an end cover 213, the housing 212 includes a bottom wall and a side wall, the side wall surrounds the bottom wall, one end of the side wall is connected to the bottom wall and the other end of the side wall encloses an opening opposite the bottom wall, the electrode lead-out portion 211 is mounted on the bottom wall of the housing 212 in an insulating manner, and the end cover 213 covers the opening. The electrode assembly 22 is accommodated in the housing 212, and two ends of the electrode assembly 22 are both provided with tabs 221. One of the two current collecting members 23 is configured to electrically connect the electrode lead-out portion 211 and one tab 221, and the other current collecting member 23 is configured to electrically connect the end cover 213 and the other tab 221. The current collecting member 23 includes a body 231, a plurality of elastic portions 232, and a plurality of through holes 2311, where the plurality of elastic portions 232 and the plurality of through holes 2311 are circumferentially provided on the body 231, the elastic portions 232 are provided in correspondence with the through holes 2311, the elastic portion 232 is connected to a hole wall of the through hole 2311, and the elastic portions 232 and the body 231 are an integrated structure. A central position of a body 231 of one of the two current collecting members 23 that is provided on the electrode lead-out portion 211 is welded to the electrode lead-out portion 211, the elastic portion 232 is welded to the tab 221 to form a weld mark 233 extending along a radial direction of the body 231, and in a radial direction of the body 231, an end of the elastic portion 232 farther away from the central position of the body 231 is connected to the hole wall of the through hole 2311, and the other end is a free end. A body 231 of one of the two current collecting members 23 that is provided on the end cover 213 is welded to the tab 221 to form a plurality of weld marks 233 extending along a radial direction of the body 231, and the weld mark 233 and the elastic portion 232 are arranged alternately along a circumferential direction of the body 231. In a radial direction of the body 231, the two ends of the elastic portion 232 are connected to two opposite hole walls of the through hole 2311, respectively, a middle part of the elastic portion 232 protrudes from a side of the body 231 back away from the tab 221 and abuts against the end cover 213 of the housing assembly 21, and the elastic portion 232 has an abutting plane 2321 for the end cover 213 to abut against.

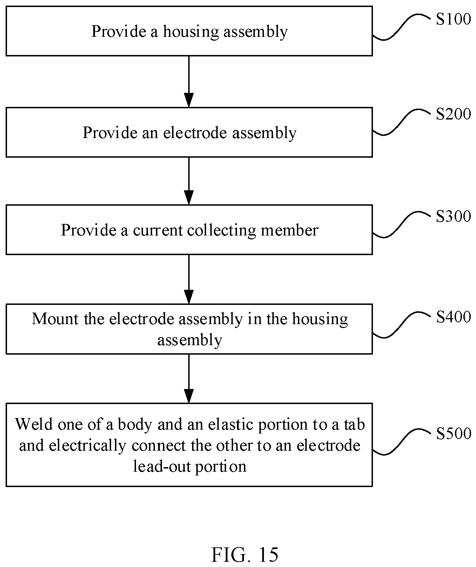

Embodiments of this application further provide a battery cell 20 manufacturing method. Referring to FIG. 15, FIG. 15 is a schematic flowchart of a battery cell 20 manufacturing method according to some embodiments of this application. The manufacturing method includes the following steps.

S100. Provide a housing assembly 21, the housing assembly 21 including an electrode lead-out portion 211 for inputting or outputting electrical energy.

S200. Provide an electrode assembly 22, the electrode assembly 22 having a tab 221.

S300. Provide a current collecting member 23, the current collecting member 23 including a body 231 and an elastic portion 232 connected to the body 231.

S400. Mount the electrode assembly 22 in the housing assembly 21.

S500. Weld one of the body 231 and the elastic portion 232 to the tab 221 and electrically connect the other to the electrode lead-out portion 211.

The elastic portion 232 is configured to cushion vibrations between the electrode assembly 22 and the housing assembly 21.

It should be noted that for the relevant structures of the battery cell 20 manufactured using the manufacturing methods according to the foregoing embodiments, reference may be made to the battery cell 20 according to the foregoing embodiments. Details are not described herein again.

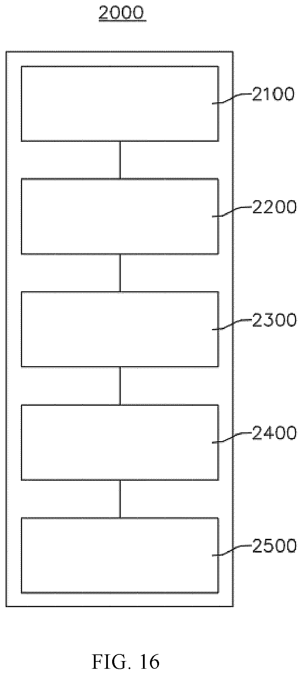

Embodiments of this application further provide a battery cell 20 manufacturing device 2000. Referring to FIG. 16, FIG. 16 is a schematic block diagram of a battery cell 20 manufacturing device 2000 according to some embodiments of this application. The manufacturing device 2000 includes a first providing means 2100, a second providing means 2200, a third providing means 2300, a first assembly means 2400, and a second assembly means 2500.

The first providing means 2100 is configured to provide a housing assembly 21, the housing assembly 21 including an electrode lead-out portion 211 for inputting or outputting electrical energy. The second providing means 2200 is configured to provide an electrode assembly 22, the electrode assembly 22 having a tab 221. The third providing means 2300 is configured to provide a current collecting member 23, the current collecting member 23 including a body 231 and an elastic portion 232 connected to the body 231. The first assembly means 2400 is configured to mount the electrode assembly 22 in the housing assembly 21. The second assembly means 2500 is configured to weld one of the body 231 and the elastic portion 232 to the tab 221 and electrically connect the other to the electrode lead-out portion 211. The elastic portion 232 is configured to cushion vibrations between the electrode assembly 22 and the housing assembly 21.

It should be noted that for the relevant structures of the battery cell 20 manufactured using the manufacturing device 2000 according to the foregoing embodiments, reference may be made to the battery cell 20 according to the foregoing embodiments. Details are not described herein again.

It should be noted that, in absence of conflict, the embodiments and features in the embodiments in this application may be combined with each other.

The above are only preferred embodiments of this application and are not intended to limit the present application. For persons skilled in the art, this application may be subjected to various modifications and changes. Any modifications, equivalent replacements, and improvements made without departing from the spirit and principle of this application shall fall within the protection scope of this application.

## Claims

1. A battery cell, comprising:
a housing assembly, the housing assembly comprising an electrode lead-out portion for inputting or outputting electrical energy;
an electrode assembly, the electrode assembly being provided in the housing assembly, the electrode assembly having a tab; and
a current collecting member, the current collecting member being provided in the housing assembly, and the current collecting member being configured to electrically connect the tab and the electrode lead-out portion;
wherein the current collecting member comprises a body and an elastic portion connected to the body, one of the body and the elastic portion being welded to the tab, the other being electrically connected to the electrode lead-out portion, and the elastic portion being configured to cushion vibrations between the electrode assembly and the housing assembly.

2. The battery cell according to claim 1, wherein the current collecting member comprises a plurality of such elastic portions; and
the plurality of elastic portions are spaced apart on the body along a circumferential direction of the body.

3. The battery cell according to claim 2, wherein the body is provided with a plurality of through holes;
wherein the plurality of through holes are spaced apart along the circumferential direction of the body; and
the elastic portions are provided in correspondence with the through holes, and the elastic portion is connected to a hole wall of the through hole.

4. The battery cell according to any one of claims 1 to 3, wherein the body is integrally formed with the elastic portion.

5. The battery cell according to any one of claims 1 to 4, wherein the housing assembly has a wall portion;
the wall portion is provided with an electrode lead-out hole, the electrode lead-out portion is mounted in the electrode lead-out hole, and at least a part of the electrode lead-out portion protrudes from an outer side of the wall portion; and
the body is connected to the electrode lead-out portion, the elastic portion is welded to the tab, and the elastic portion is configured to elastically deform relative to the body when the electrode assembly moves relative to the electrode lead-out portion.

6. The battery cell according to claim 5, wherein the electrode lead-out portion is connected to a central position of the body.

7. The battery cell according to claim 5 or 6, wherein the elastic portion extends along a radial direction of the body; and
an end of the elastic portion farther away from a central position of the body is connected to the body, and an end of the elastic portion closer to the central position of the body is a free end.

8. The battery cell according to any one of claims 5 to 7, wherein the elastic portion is welded to the tab to form a weld mark, and the weld mark extends along a radial direction of the body.

9. The battery cell according to any one of claims 5 to 7, wherein the elastic portion is welded to the tab to form a plurality of weld marks; and
the plurality of weld marks are spaced apart along a radial direction of the body, and the weld marks extend along a circumferential direction of the body.

10. The battery cell according to any one of claims 1 to 4, wherein the housing assembly has a wall portion, the wall portion being the electrode lead-out portion; and
the body is welded to the tab, the elastic portion abuts against the wall portion, and the elastic portion protrudes from a side of the body back away from the tab and is configured to elastically deform relative to the body when the electrode assembly moves relative to the wall portion.

11. The battery cell according to claim 10, wherein two ends of the elastic portion in a radial direction of the body are connected to the body, and a middle part of the elastic portion protrudes from the side of the body back away from the tab.

12. The battery cell according to claim 10 or 11, wherein the elastic portion has an abutting plane for the wall portion to abut against.

13. The battery cell according to any one of claims 10 to 12, wherein the body is welded to the tab to form a weld mark, the weld mark being alternately arranged with the elastic portion along a circumferential direction of the body.

14. The battery cell according to claim 13, wherein the weld mark extends along a radial direction of the body.

15. The battery cell according to claim 5 or 10, wherein the housing assembly comprises a housing and an end cover; wherein
the housing comprises a bottom wall and a side wall, the side wall surrounds the bottom wall, one end of the side wall is connected to the bottom wall, the other end of the side wall encloses an opening opposite the bottom wall, the end cover covers the opening, and the wall portion is the bottom wall or the end cover.

16. A battery, comprising:
a box; and
the battery cell according to any one of claims 1 to 15, the battery cell being accommodated in the box.

17. An electric apparatus comprising the battery according to claim 16.

18. A battery cell manufacturing method, wherein the manufacturing method comprises:
providing a housing assembly, the housing assembly comprising an electrode lead-out portion for inputting or outputting electrical energy;
providing an electrode assembly, the electrode assembly having a tab;
providing a current collecting member, the current collecting member comprising a body and an elastic portion connected to the body;
mounting the electrode assembly in the housing assembly; and
welding one of the body and the elastic portion to the tab and electrically connecting the other to the electrode lead-out portion;
wherein the elastic portion is configured to cushion vibrations between the electrode assembly and the housing assembly.

19. A battery cell manufacturing device, wherein the manufacturing device comprises:
a first providing means, wherein the first providing means is configured to provide a housing assembly, the housing assembly comprising an electrode lead-out portion for inputting or outputting electrical energy;
a second providing means, wherein the second providing means is configured to provide an electrode assembly, the electrode assembly having a tab;
a third providing means, wherein the third providing means is configured to provide a current collecting member, the current collecting member comprising a body and an elastic portion connected to the body;
a first assembly means, wherein the first assembly means is configured to mount the electrode assembly in the housing assembly; and
a second assembly means, wherein the second assembly means is configured to weld one of the body and the elastic portion to the tab and electrically connect the other to the electrode lead-out portion;
wherein the elastic portion is configured to cushion vibrations between the electrode assembly and the housing assembly.
